# EUROPEAN PATENT SPECIFICATION

(11) **EP 0 354 585 B1**
(45) Date of publication and mention of the grant of the patent: **22.11.1995**
(21) Application number: 89114907.2
(22) Date of filing: 11.08.1989
(51) Int. Cl.: G06F 9/38

(54) **Instruction pipeline microprocessor**
Mikroprozessor mit Befehlspipeline
Microprocesseur à pipeline d'instructions

(30) Priority: 11.08.1988 JP 198789/88
(43) Date of publication of application: 14.02.1990
(73) Proprietor: KABUSHIKI KAISHA TOSHIBA, Kawasaki-shi, Kanagawa-ken 210 (JP)
(72) Inventor: Okamoto, Kosei, Kunitachi-shi (JP)
(74) Representative: Lehn, Werner, Dipl.-Ing.

(56) References cited:
- EP-A- 0 106 670
- SPRING COMPCON 88, March 4, 1988, SAN FRANCISCO, CA, US pages 25-29; K. OKAMOTO ET AL.: 'Design considerations for 32bit microprocessor TX3 '
- THE 12TH ANNUAL INTERNATIONAL SYMPOSIUM ON COMPUTER ARCHITECTURE June 19, 1985, BOSTON, US pages 36-44; J.E. SMITH ET AL.: 'Implementation of precise interrupts in pipelined processors '

## Description

### BACKGROUND OF THE INVENTION

### Field of the Invention

The present invention relates to an instruction parallel execution type microprocessor, more particularly to an instruction pipeline type microprocessor capable of rapidly executing instructions.

### Description of the Prior Art

In the instruction pipeline type microprocessor according to the prior art, a particular register or registers are used in order to perform an operand address calculation in such as an ADD instruction. However, as the content of the register is modified by a previous instruction such as a TRANSFER instruction, the ADD instruction can not be shifted to an operand address calculation stage before a write stage to a general purpose register is terminated, thus delaying the processing of the instruction.

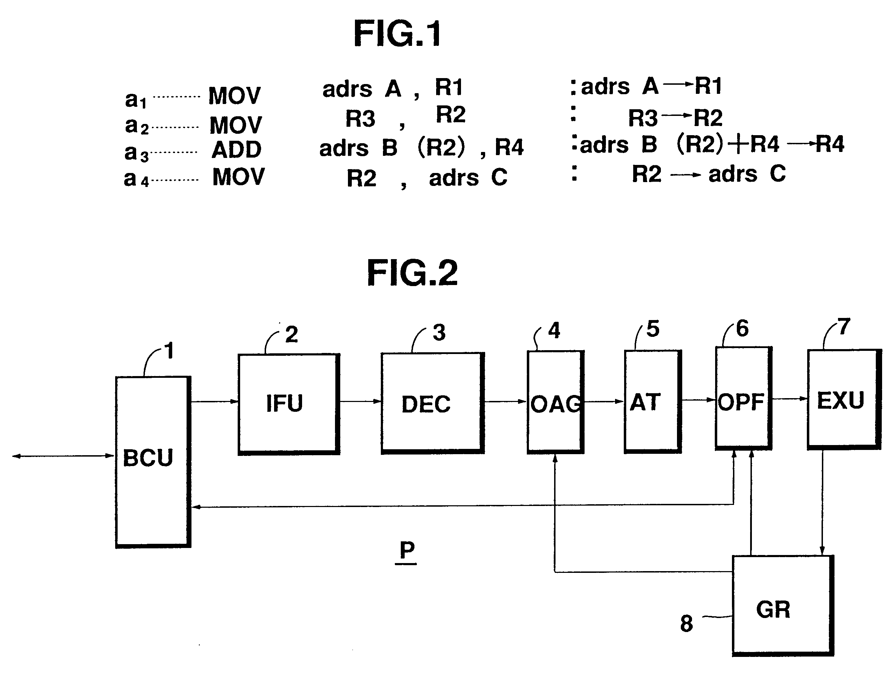

Namely, Fig. 2 shows an outline construction of the instruction pipeline type microporcessor according to the prior art.

In Fig. 2, reference numeral 1 indicates a bus control section (BCU) for connecting a microprocessor P to an external circuit, numeral 2 indicates an instruction fetch section (IFU), 3 indicates a decoder (DEC) for decoding instructions, 4 an operand address calculation section (OAG), 5 an address translation section (AT) for converting a logical address into a physical address, 6 an operand fetch section (OPF) for fetching an operand, 7 an operation execution section (EXU) for executing instructions, 8 general purpose register group (GR) consisting of a plurality of registers R₁, R₂, R₃, R₄, ... (not indicated).

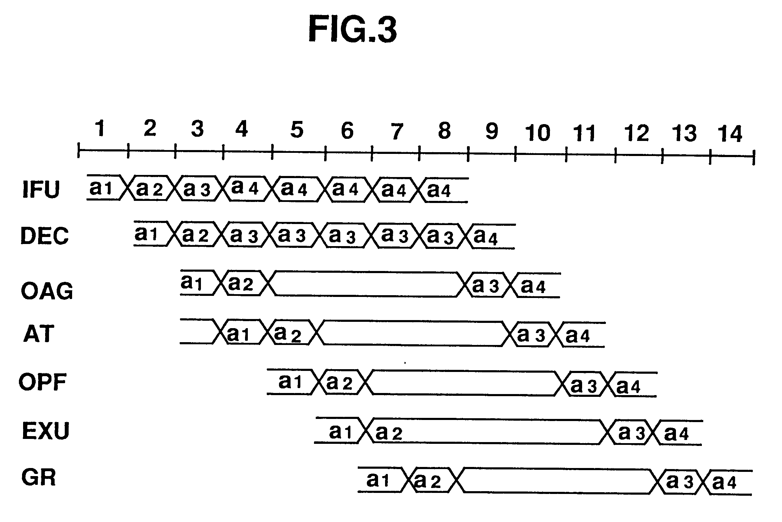

When machine instructions shown in Fig. 1 are executed by the microprocessor P shown in Fig. 2 for instance, the timing of the instruction pipeline processing becomes the one shown in Fig. 3. As shown in Figs. 1 and 3, supposing that a₁ is an instruction which transfers the content of an address A to the register R₁ (not indicated) in GR₈, a₂ is an instruction which transfers data in the register R₃ in GR₈ to the register R₂, a₃ is an ADD instruction which transfers the content of an address B which is modified by the register R₂ to the register R₄, and a₄ is an instruction which transfers data in the register R₂ to a memory indicated by address C, the content of the register R₂ is used by the instruction a₃ in order to perform an operand address calculation. However, the content of the register R₂ is modified by the instruction a₂. As a result, the instruction a₃ can not move to OAG₄ until the transfer of the instruction a₂ to GR₈ is terminated, thus delaying the processing of the instruction a₃.

Since the operation execution section and the general purpose register group in the microprocessor according to the prior art are not duplicated, succeeding instructions can not be executed only after the instructions for updating the general purpose register group GR₈ have been completely executed.

Accordingly, the merits of the pipeline system can not be demonstrated due to stagnation of the processing flow in the instruction pipeline type microprocessors according to this prior art.

The article "Design considerations for 32 bit microprocessor TX3" by K. OKAMOTO ET AL., in SPRING COMPCON 88, March 4, 1988, SAN FRANCISCO, CA, US, pages 25-29, describes an instruction pipeline type microprocessor comprising a plurality of simultaneously operating operation execution sections.

Each decoded instruction is issued in order of program sequence, but instructions may complete out of order because of differences in execution time or number of pipeline stages. In order to ensure precise interrupts and traps, TX3 has a Reorder Buffer and two general register files which are the Current GR file and the Future GR file. (Precise interrupts and traps require that all instructions prior to the interrupted instruction have completed and all instructions following the interrupted instruction have not begun.) The Future GR file maintains the copies of the registers used for normal program execution, and the Current GR file holds the state of the registers to be used in case of an interrupt or trap. The Reorder Buffer keeps track of which instructions have been issued, and in what order. Register writes are sent immediately to the Future GR file, but are queued by the Reorder buffer to be written to the Current GR file as the immediately previous instruction completes. (Additional logic ensures that results are computed before they are read.)

### SUMMARY OF THE INVENTION

It is therefore an object of the present invention to provide an instruction pipeline type microprocessor comprising a plurality of simultaneously operating operation execution sections having a simpler circuitry for reordering.

According to the present invention there is provided an instruction pipeline type microprocessor as claimed in Claim 1.

These and other objects, features and advantages of the present invention will be more apparent from the following description of a preferred embodiment, taken in conjunction with the accompanying drawings.

### FIRST DESCRIPTION OF THE DRAWINGS

Fig. 1 is one example of a program for clarifying problems which the microprocessors according to the prior art have,
Fig. 2 is the construction of the microprocessor of the instruction pipeline type according to the prior art,
Fig. 3 illustrates a flow of instruction processing in the microprocessor shown in Fig. 2,
Fig. 4 is a basic construction of the instruction pipeline type microprocessor according to the present invention,
Fig. 5 illustrates a flow of instruction processing in each section constituting the microprocessor shown in Fig. 4,
Fig. 6 is a detailed construction of the operation execution section and the general purpose register group shown in Fig. 4,
Fig. 7 illustrates a format of each instruction register shown in Fig. 6, and
Fig. 8 illustrates an input format of the register group FGR for storing the result of the instructions in the general purpose registers, processed in a look-forward manner.

### DETAILED DESCRIPTION OF THE PREFERRED EMBODIMENT

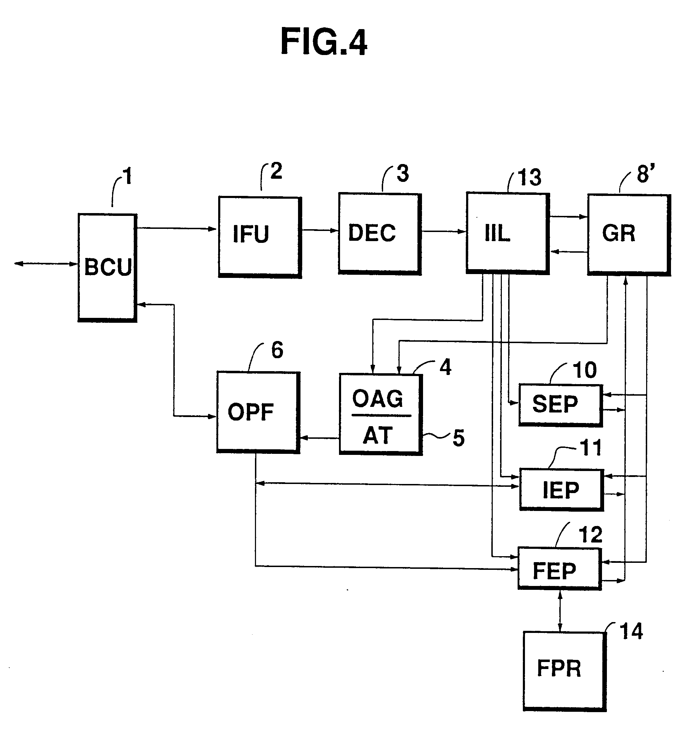

Fig. 4 shows a principle construction of the instruction pipeline type microprocessor according to the present invention.

In the figure, same constructing elements as those shown in Fig. 2 are indicated by the same reference numerals. The instruction pipeline type microprocessor comprises an operation execution section consisting of a first operation execution (SEP) 10 for executing instructions having no memory operand respectively, a second operation execution section (IEP) 11 for executing instructions having memory operand respectively, and a third operation execution section (FEP) 12 for executing floating point instructions. In addition, reference numeral 13 indicates an instruction sending section for sending decoded instructions to each operation section and numeral 14 indicates a floating point register.

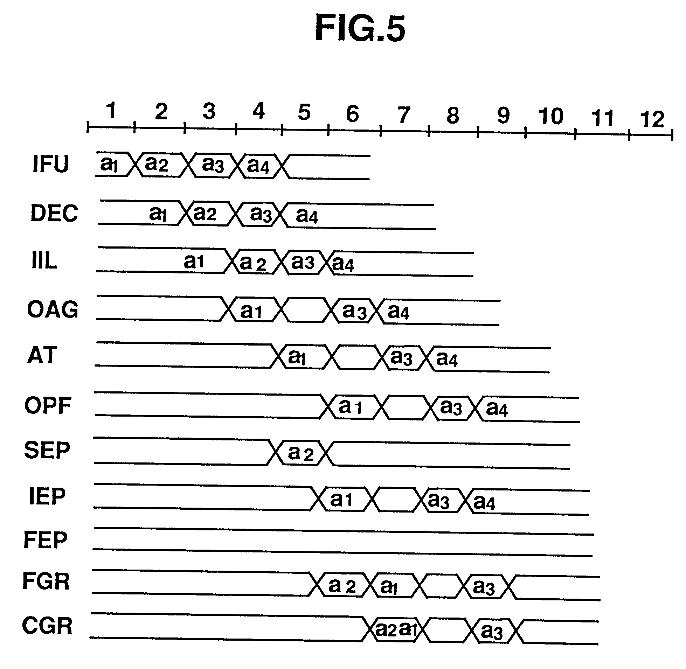

In the microprocessor according to the present invention shown in Fig. 4, the pipeline instructions shown in Fig. 4 are executed in a manner shown in Fig. 5. Namely, each instruction is fetched and processed for every clock; Instruction a₂ having a memory operand is processed in the order from the instruction fetch section 2 → the decoder 3 → the instruction issue section 13 → the operand address section 4 → the address translation section 5 → the operand fetch section 6 to the second operation execution section 11.

Instruction a₂ having no memory operand but only a register operand is processed in the order from the instruction fetch section 2 → the decoder 3 → the instruction issue section 13 to the first operation execution section 10.

As shown in Fig. 5, since the executions of the instructions a₂ and a₁ are terminated at the fifth and sixth clocks respectively, it is necessary to avoid discrepancy between the data in the general purpose register group 8′ and the program flow. To this end, the general purpose register group 8′ comprises register group for holding resulting data program-processed which will be described later and register group for temporarily holding the execution result of instruction in the look-forward manner, i.e., the two register groups are duplicated.

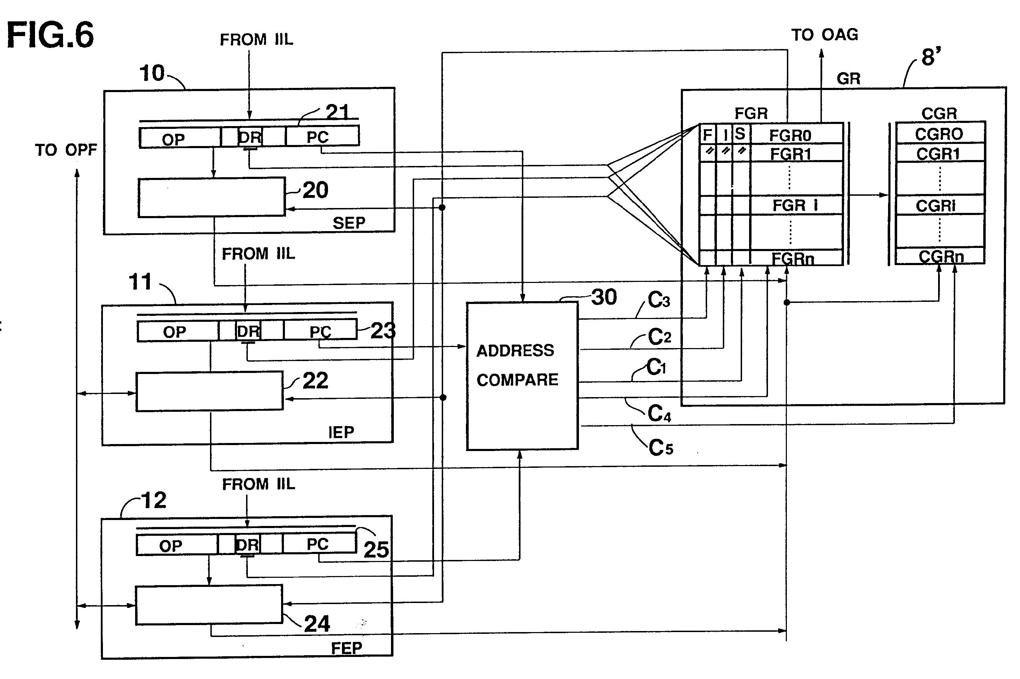

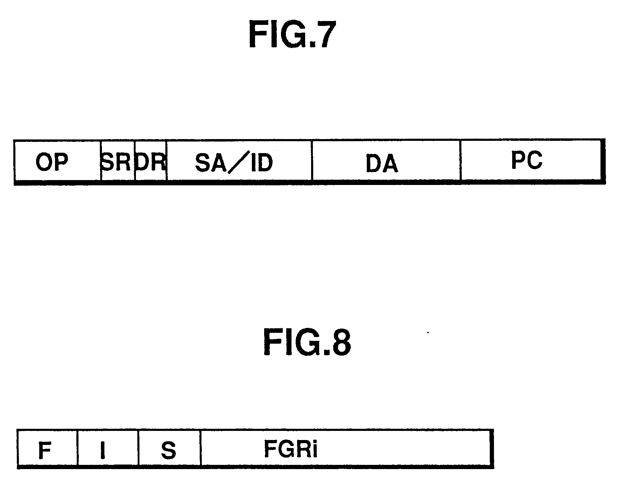

In Fig. 6, the first operation execution section 10 comprises a first operator 20 and a first instruction register 21, the second operation execution section 11 comprises a second operator 22 and a second instruction register 23, and the third operation execution section 12 comprises a third operator 24 and a third instruction register 25. Each of the instruction registers 21, 23, and 25 has an instruction format shown in Fig. 7.

That is to say, in Fig. 7, OP indicates an operational function designation field of the associated operators, SR indicates a source register designation field, DR a destination register field, SA/ID a source operand address or immediate data holding field, DA a destination operand address holding field, and PC an address holding field of an instruction in execution.

Returning to Fig. 6, the general purpose register group 8′ is divided into a register group CGRᵢ (i= 1,2, 3, ... n) for storing data as a result processed in accordance with a program and a register group FGRᵢ (i = 1, 2, 3, ... n). Moreover, in Fig. 6, reference numeral 30 indicates an instruction address compare section, which is included in the general purpose register 8′.

In Fig. 8, there is shown a detailed format of the register group FGR which is consisted of three tag portions F, I, S each consisting of three bits and a data holding portion FGRi for holding each data.

Now, turning back to Fig. 6, each PC field of the instruction registers 21, 23, 25 is applied to the instruction address compare section 30 in order to determine whether or not a succeeding instruction is being executed by jumping a preceding instruction, for the comparisons of each PC field.

From the result of the comparison, when the PC field of the first instruction register 21 is not minimum "1" output signal is produced from the output C₁ of the compare section and when the PC field of the second instruction register 23 is not minimum, "1" output signal is produced from the output C₂ thereof, while when the DC field of the instruction register 25 is not minimum, "1" output signal is produced from the output C₃ thereof.

Furthermore, when the address PC of the instruction register in the operator which has executed an instruction is not minimum, "1" output signal (FGR WRITE signal) is produced from the output C₄ of the address compare section 30, while when the address PC of the instruction register is minimum, "1" output signal (CGR WRITE signal) is produced from the output C₅ of the compare section 30.

When the operation in each operator is terminated, the tag S in the register FGR is set at "1" when C₄=1, C₁=1, and the I tag is set at "1" when C₂=1, while the F tag is set at "1" when C₃=1.

The operation result from each of the operators 20, 22, and 24 are stored in the data holding section FGRi designated by the DR field of each of the instruction registers 21, 23, 25.

When the operation of each of the operators 20, 22, and 24 is terminated, the result of each operation is stored in the data holding section FGRᵢ and CGRᵢ, designated by the DR field of each instruction register subject to C₄=0, C₅=1. The data in another FGRᵢ in which any one of the tags F, I, and S has been set up, is designated in the corresponding CGRᵢ.

Accordingly, as shown in Fig. 5, in operation, the PC field of the first instruction register 21 shown in Fig. 3, contains the address of the instruction a₂ at the fifth clock at which time the instruction a₂ is to be executed and the PC field of the second instruction register 23 contains the instruction a₁. However, since an instruction has not been sent to the PC field of the third instruction register 25 from the instruction sending section 13, its PC field contains no address. As a result, no instruction is executed in the third operation execution section 12.

On the other hand, since the first instruction register 21 contains the instruction a₂ and the address PC field thereof is larger than that of the instruction a₁, C₁=1 is established and the result of the operation is written into FGR₂ while the tag S is set at "1".

The instruction a₁ is executed in the second operator 11 in the sixth clock. In this case, however, as the instruction register 21 in the first operator 10 contains no instruction because the instruction a₂ has already been executed therein, no action is performed. Accordingly, since C₄=0, C₅=1, the result of the operation of the instruction a₁ is stored in the CGR₁ and FGR₁, while the data in FGR₂ in which the tag S₁ has been set at "1" is now transferred to CGR₂ and is stored for a later use as data processed along the program flow.

As will be appreciated from the above description, the data necessary for the calculation of the effective address of the next instruction a₃ can be picked up from the FGR₂ (which corresponds to the register R₂) at the termination of the fifth clock. As a result, the instruction a₃ can be moved to the effective address calculation section 4 immediately.

Accordingly, unlike the microprocessors of this type according to the prior art, in the instruction pipeline type microprocessor according to the present invention, a sequential program processing in such that the instruction a₃ is processed only after the instructions a₁ and a₂ have been executed, is not required in the present invention.

As has been described in the foregoing, in the instruction pipeline type microprocessor according to the present invention, the operation execution section is duplicated so as to execute a plurality of instructions simultaneously, while the general purpose register group is also divided into a second register group for storing data processed along the program flow and a first register group for storing data as a result of having in look-forward manner executed a succeeding instruction.

In the instruction pipeline type microprocessor according to the present invention, there is also provided a compare and decision means whereby a decision is made whether or not the succeeding instruction is being executed by jumping the preceding instructions and the processed data which have been held in the first register group are sent to the second register group so as to replace them in the form along the program flow in accordance with the result of the decision.

Since succeeding instructions can be in look-forward manner executed without waiting for the result of the execution of the preceding instructions, the performance of the microprocessor of the instruction pipeline type according to the present invention can be strikingly improved.

## Claims

1. An instruction pipeline type microprocessor, comprising:
(a) means (2, 3, 13) for fetching, decoding and determining a plurality of different kinds of decoded instructions and sending the plurality of different kinds of decoded instructions in accordance with the determined different kinds;
(b) a plurality of operation execution sections (10, 11, 12) for receiving the decoded instructions according to the determined different kinds and respectively executing the plurality of different kinds of decoded instructions simultaneously, wherein each of the plurality operation execution sections includes an instruction register (21: 23: 25) having at least an instruction address holding field (PC) indicative of the address of an instruction decoded in a program and a destination register designation field (DR) designating the location in a data holding section where the operation execution result has to be stored; said data holding system comprising
(c) first storing means (FGRi) for storing the operation execution results in the order as being processed, wherein the first storing means includes a plurality of tag bits (F ; I ; S), one tag bit for each operation execution section (10, 11, 12), for indicating whether or not the corresponding operation execution section has executed an instruction (a₂) before a preceeding instruction (a₁) has been executed;
(d) second storing means (CGRi) for storing the operation execution results in accordance with the program order;
(e) compare means (30) for comparing the instruction address holding fields (PC) from the operation execution sections (10, 11, 12) and producing signals (C₁ ; C₂ ; ... ; C₅) indicative of the result of comparison, for sending the operation execution result and the corresponding tag bit (F ; I ; S) to the first storing means (FGRi), based on the sequence of completion of the data processing, whereby the value of the corresponding tag bit (F ; I ; S) is determined by corresponding signals (C₁ ; C₂ ; C₃) from the comparator, or for sending the processed data to the first and second storing means, so that the processed data already stored in the first storing means (FGRi) are transferred to the second storing means (CGRi) in the predetermined program order according to compare results and contents of the tag bits (F ; I ; S).

2. A microprocessor as claimed in claim 1, wherein said plurality of operation execution sections include a first operation execution section (10) for executing instructions having no memory operand respectively, a second operation execution section (11) for executing instructions having a memory operand respectively, and a third operation execution section (12) for executing floating point instructions.

3. A microprocessor as claimed in claim 1 or 2, wherein said first storing means is comprised of a first register group (FRGi) for successively storing the result of the operations about instructions executed, and said second storing means comprised of a second register group (CGRi) for storing the results of the operations along the predetermined program flow.

## Patentansprüche

1. Mikroprozessor vom Befehls-Pipelinetyp, umfassend:
(a) eine Einrichtung (2, 3, 13) zum Holen, Dekodieren und Bestimmen einer Vielzahl von verschiedenen Arten von dekodierten Befehlen und zum Senden der Vielzahl von verschiedenen Arten von dekodierten Befehlen gemäß der bestimmten verschiedenen Arten;
(b) eine Vielzahl von Operationsausführungsabschnitten (10, 11, 12) zum Empfang der dekodierten Befehle gemäß der bestimmten verschiedenen Arten und zum jeweiligen Ausführen der Vielzahl von verschiedenen Arten von dekodierten Befehlen gleichzeitig, wobei jeder der Vielzahl von Operationsausführungsabschnitten ein Befehlsregister (21:23:25) umfaßt, welches wenigstens ein Befehlsadressenhaltefeld (PC), welches die Adresse eines in einem Programm dekodierten Befehl anzeigt, und ein Zielregisterbezeichnungsfeld (DR) aufweist, welches die Stelle in einem Datenhalteabschnitt anzeigt, wo das Betriebsausführungsergebnis gespeichert werden soll; wobei das Datenhaltesystem umfaßt:
(c) eine erste Speichereinrichtung (FGRi) zum Speichern der Operationsausführungsergebnisse in der Reihenfolge, so wie sie verarbeitet werden, wobei die erste Speichereinrichtung eine Vielzahl von Kennungsbits (F; I; S) umfaßt, jeweils ein Kennungsbit für jeden Operationsausführungsabschnitt (10, 11, 12), zum Anzeigen, ob der entsprechende Operationsausführungsabschnitt einen Befehl (a₂) ausgeführt hat oder nicht, bevor ein vorangehender Befehl (a₁) ausgeführt worden ist;
(d) eine zweite Speichereinrichtung (CGRi) zum Speichern der Operationsausführungsergebnisse gemäß der Programmreihenfolge;
(e) eine Vergleichseinrichtung (30) zum Vergleichen der Befehlsadressenhaltefelder (PC) von den Operationsausführungsabschnitten (10, 11, 12) und zum Erzeugen von Signalen (C₁; C₂; ...; C₅), die das Ergebnis eines Vergleichs anzeigen, zum Senden des Operationsausführungsergebnisses und des entsprechenden Kennungsbits (F; I; S) an die erste Speichereinrichtung (FGRi) auf der Grundlage der Reihenfolge eines Abschlusses der Datenverarbeitung, wobei der Wert des entsprechenden Kennungsbits (F; I; S) durch entsprechende Signale (C₁; C₂; C₃) von dem Vergleicher bestimmt wird, oder zum Senden der verarbeiteten Daten an die erste und zweite Speichereinrichtung, so daß die bereits in der ersten Speichereinrichtung (FGRi) gespeicherten verarbeiteten Daten an die zweite Speichereinrichtung (CGRi) in der vorgegebenen Programmreihenfolge gemäß von Vergleichsergebnissen und Inhalten der Kennungsbits (F; I; S) transferiert werden.

2. Mikroprozessor nach Anspruch 1,
dadurch **gekennzeichnet,** daß die Vielzahl von Operationsausführungsabschnitten umfassen: einen ersten Operationsausführungsabschnitt (10) zum Ausführen von Befehlen mit jeweils keinem Speicheroperanden, einen zweiten Operationsausführungsabschnitt (11) zum Ausführen von Befehlen mit jeweils einem Speicheroperanden und einen dritten Operationsausführungsabschnitt (12) zum Ausführen von Gleitkommabefehlen.

3. Mikroprozessor nach Anspruch 1 oder 2,
dadurch **gekennzeichnet,** daß die erste Speichereinrichtung umfaßt: eine erste Registergruppe (FRGi) zum sukzessiven Speichern des Ergebnisses der Operationen für ausgeführte Befehle und eine zweite Speichereinrichtung umfassend eine zweite Registergruppe (CGRi) zum Speichern der Ergebnisse der Operationen entlang des vorgegebenen Programmflusses.

## Revendications

1. Microprocesseur du type à pipeline d'instructions, comprenant :
(a) des moyens (2, 3, 13) destinés à rechercher, décoder et déterminer une pluralité de types différents d'instructions décodées et à envoyer la pluralité de types différents d'instructions décodées conformément aux différents types déterminés,
(b) une pluralité de sections d'exécution d'opérations (10, 11, 12) destinée à recevoir les instructions décodées conformément aux différents types déterminés et à exécuter respectivement la pluralité des types différents d'instructions décodées simultanément, dans lequel chacune de la pluralité de sections d'exécution d'opérations comprend un registre d'instructions (21 : 23 : 25) comportant au moins un champ de conservation d'adresse d'instructions (PC) indicatif de l'adresse d'une instruction décodée dans un programme et un champ de désignation de registre de destination (DR), représentant l'emplacement dans une section de conservation de données, auquel le résultat de l'exécution de l'opération doit être mémorisé, ledit système de conservation de données comprenant
(c) un premier moyen de mémorisation (FGRi) destiné à mémoriser les résultats de l'exécution de l'opération dans l'ordre où elle est traitée, dans lequel le premier moyen de mémorisation comprend une pluralité de bits d'étiquette (F, I, S), un bit d'étiquette pour chaque section d'exécution d'opération (10, 11, 12), afin d'indiquer si la section d'exécution d'opération correspondante a exécuté ou non une instruction (a₂) avant qu'une instruction précédente (a₁) ait été exécutée,
(d) un second moyen de mémorisation (CGRi) destiné à mémoriser les résultats d'exécution d'opérations conformément à l'ordre du programme,
(e) un moyen de comparaison (30) destiné à comparer les champs de conservation d'adresse d'instructions (PC) des sections d'exécution d'opérations (10, 11, 12) et à produire des signaux (C₁, C₂, ..., C₅) indicatifs du résultat de la comparaison, afin d'envoyer le résultat de l'exécution de l'opération et le bit d'étiquette correspondant (F, I, S) vers le premier moyen de mémorisation (FGRi), sur la base de la séquence d'exécution du traitement des données d'où il résulte que la valeur du bit d'étiquette correspondant (F, I, S) est déterminée par les signaux correspondants (C₁, C₂, C₃) provenant du comparateur, ou à envoyer les données traitées vers les premier et second moyens de mémorisation de façon à ce que les données traitées déjà mémorisées dans le premier moyen de mémorisation (FGRi) soient transférées vers le second moyen de mémorisation (CGRi) dans l'ordre du programme prédéterminé conformément au résultat de la comparaison et ou contenu des bits d'étiquettes (F, I, S).

2. Microprocesseur selon la revendication 1, dans lequel ladite pluralité de sections d'exécution d'opérations comprend une première section d'exécution d'opérations (10) destinée à exécuter des instructions ne comportant respectivement aucun opérande de mémoire, une seconde section d'exécution d'opérations (11) destinée à exécuter des instructions comportant respectivement un opérande de mémoire, et une troisième section d'exécution d'opérations (12) destinée à exécuter des instructions en virgule flottante.

3. Microprocesseur selon la revendication 1 ou la revendication 2, dans lequel ledit premier moyen de mémorisation est constitué d'un premier groupe de registres (FRGi) destiné à mémoriser successivement le résultat des opérations concernant les instructions exécutées, et ledit second moyen de mémorisation est constitué d'un second groupe de registres (CGRi) destiné à mémoriser les résultats des opérations suivant le déroulement de programme prédéterminé.
